# EUROPEAN PATENT APPLICATION

(11) **EP 4 657 147 A1**
(43) Date of publication of application: **03.12.2025**
(21) Application number: 25178117.5
(22) Date of filing: 22.05.2025
(51) Int. Cl.: G02F 1/035, G02F 1/21, G02F 1/225, G02F 1/355

(54) **SINGLE-DRIVE DIFFERENTIAL ELECTROOPTICAL MODULATORS**

(30) Priority: 28.05.2024 US 202418676117
(71) Applicant: Cisco Technology, Inc., San Jose, CA 95134-1706 (US)
(72) Inventor: Chen, Jiayang, Maynard, MA (US); Chen, Long, Maynard, MA (US); Chen, Li, Maynard, MA (US); Aroca, Ricardo A., Maynard, MA (US)
(74) Representative: Noble, Nicholas

(57) **Abstract**

One embodiment of the disclosure is an electro-optical modulator system. The system may include a ferroelectric material having one or more crystal orientation axes and a Mach-Zehnder interferometer (MZI) modulator comprising an MZI input, an MZI output, a first arm and a second arm, wherein the first arm and the second arm are in optical communication with the MZI input and the MZI output. The ferroelectric material may define or be in communication with a portion of the first arm and the second arm. The first arm may have a first phase parameter and the second arm may have a second phase parameter. The arms may have domain orientations that differ. A portion of the first arm may include a portion of one or more loading layers and a portion of the second arm may include a portion of one or more loading layers.

## Description

### FIELD

This disclosure relates generally to the fields of electro-optical modulators, photonic integrated circuits, and optical telecommunications.

### BACKGROUND

Contemporary optical communications and other photonic systems make extensive use of photonic integrated circuits that are advantageously mass-produced in various configurations for various purposes.

### BRIEF DESCRIPTION OF THE FIGURES

Unless specified otherwise, the accompanying drawings illustrate aspects of the innovations described herein. Referring to the drawings, wherein like numerals refer to like parts throughout the several views and this specification, several embodiments of presently disclosed principles are illustrated by way of example, and not by way of limitation. The drawings are not intended to be to scale. A more complete understanding of the disclosure may be realized by reference to the accompanying drawings in which:
Figure 1A is a layout diagram of an MZI modulator with one domain-engineered arm and a ground-signal-ground-signal-ground input configuration for a single electrical driver according to an exemplary embodiment of the disclosure.
Figure 1B is a schematic cross-sectional diagram of an MZI modulator with one domain-engineered arm that shows various layers according to an exemplary embodiment of the disclosure.
Figure 2A is a layout diagram of an MZI modulator with one domain-engineered arm and high voltage poling electrodes according to an exemplary embodiment of the disclosure.
Figure 2B is a layout diagram of an MZI modulator with one domain-engineered arm wherein signal electrodes also act as high voltage poling electrodes according to an exemplary embodiment of the disclosure.
Figure 3A is a cross section of an MZI modulator with one domain-engineered arm and SiN-loaded waveguides according to an exemplary embodiment of the disclosure.
Figure 3B is a cross section of an MZI modulator with one domain-engineered arm and shallow-etched waveguides according to an exemplary embodiment of the disclosure.
Figure 4A is a cross section of an MZI modulator with one domain-engineered arm, SiN-loaded waveguides according to an exemplary embodiment of the disclosure.
Figure 4B is a cross section of an MZI modulator with one domain-engineered arm, shallow-etched waveguides according to an exemplary embodiment of the disclosure.
Figure 4C is a top-down view of contact pads for an electrical driver according to an exemplary embodiment of the disclosure.
Figure 5 is a cross-sectional schematic view of a modulator design integrated with a photonic integrated circuit according to an exemplary embodiment of the disclosure.

### DESCRIPTION OF EXAMPLE EMBODIMENTS

### OVERVIEW

In part, the disclosure relates to an electro-optical modulator system. The system may include a thin film ferroelectric material having one or more crystal orientation axes and a Mach-Zehnder interferometer (MZI) modulator comprising an MZI input, an MZI output, a first arm and a second arm, wherein the first arm and the second arm are in optical communication with the MZI input and the MZI output. The thin film ferroelectric material may define or be in communication with a portion of the first arm and the second arm. The first arm may have a first phase parameter and the second arm may have a second phase parameter. The first arm may have a first domain orientation and the second arm may have a second domain orientation. The second domain orientation is substantially opposite the first domain orientation. A portion of the first arm may include a portion of one or more loading layers and a portion of the second arm may include a portion of one or more loading layers.

### EXAMPLE EMBODIMENTS

In part, in one aspect, the disclosure relates to an electro-optical modulator or Mach-Zehnder interferometer (MZI) modulator based on thin film ferroelectrics. In one aspect, the MZI modulator includes two arms and operates in a push-pull mode wherein the two arms are electro-optically modulated out-of-phase. In one aspect, the MZI modulator operates in a push-pull mode while driven by a single differential electrical driver with a conventional ground-signal-ground-signal-ground or a ground-signal-signal-ground configuration. In one aspect, domain-engineering by poling of one arm of the MZI modulator allows the modulator to operate in a push-pull mode with a single electrical driver. In various embodiments, each arm of a given MZI modulator may include a portion of a thin film ferromagnetic material and portions of various loading layers. The loading layers are configured to transmit light along each arm or a portion thereof with one of the arms transmitting light of a different phase relative to the other arm because of the domain engineering of one of or both of the ferromagnetic regions or sections in communication with portions of the various loading layers.

In many embodiments, thin film lithium niobate (TFLN) electro-optical modulators are promising for applications in high-speed optical communications due to their high bandwidth, low insertion loss, and high linearity. TFLN modulators can be fabricated on a lithium-niobate-on insulator platform or can be heterogeneously integrated on a silicon photonic platform. Compared to bulk lithium niobate modulators, TFLN modulators provide higher optical confinement and higher modulation efficiency with a lower half-wave voltage. In some embodiments, TFLN also enables shorter Mach-Zehnder interferometers (MZI) of about one to two centimeters with over 100 GHz bandwidth.

In many embodiments, TFLN Mach-Zehnder interferometer (MZI) modulators or Mach-Zehnder modulators (MZMs) may be fabricated on X-cut lithium niobate (LN) wafers in which the Z direction of the crystal is within the wafer surface plane. In many embodiments, a modulator fabricated in an X-cut LN wafer can allow for a push-pull mode of operation, wherein the two optical branches or arms of the modulator are electro-optically modulated out-of-phase, with a single-ended GSG (ground-signal-ground) device topology / configuration. In some embodiments, however, a single-ended modulator may be susceptible to RF crosstalk from devices in proximity, and in many embodiments, various commercial multi-channel modulator drivers are differential.

In many embodiments, an MZI modulator fabricated on an X-cut LN wafer cannot use a single differential driver with a GSSG (ground-signal-signal-ground) or a GSGSG (ground-signal-ground-signal-ground) topology or configuration or arrangement of ground and differential signal lines to achieve a push-pull mode of operation because the two optical arms will be modulated in-phase. The various signal lines may be disposed relative to each other and other system components in various configurations. In some embodiments, a push-pull mode of operation could be achieved in an X-cut TFLN MZI modulator with two differential signal pairs, one on pair on each optical arm, in an S⁺S⁻S⁻S⁺ configuration, but in many implementations, an extra signal pair may use larger spacing and a larger device footprint. In some embodiments, the signal lines comprise a first differential signal line S1 and a second differential signal line S2 and the various ground lines comprise a first outer ground electrode G1, a middle ground electrode G3, and a second outer ground electrode G2. Accordingly in various embodiments G1S1S2G1 and G1S1G3S2G2 configurations may be used for the driver or signal and ground electrode configurations. In various embodiments, one or more of the electrodes may be biased or undergo biasing in support of operating the system. In some embodiments, the electrode G3 may be a biasing electrode, a biasing pad, or a middle electrode. G3 may be disposed between S1 and S2 in various embodiments.

In various embodiments, the MZI modulator that utilizes domain engineering of thin film ferroelectric materials, such as LiNbO₃, LiTaO₃, BaTiO₃, to achieve a single-drive, single differential pair configuration. In various embodiments, the crystal orientation of one arm of the MZI modulator is reversed or inverted or changed by poling. Domain reversal occurs when an applied electric field exceeds the ferroelectric's coercive field. In various embodiments, the coercive field is about 40 kV/mm in thin film lithium niobate. In some embodiments, one or more of the crystal orientation axes of the ferroelectric material in the first arm are inverted, changed, or reversed with respect to one or more of the crystal orientation axes of the ferroelectric material in the second arm.

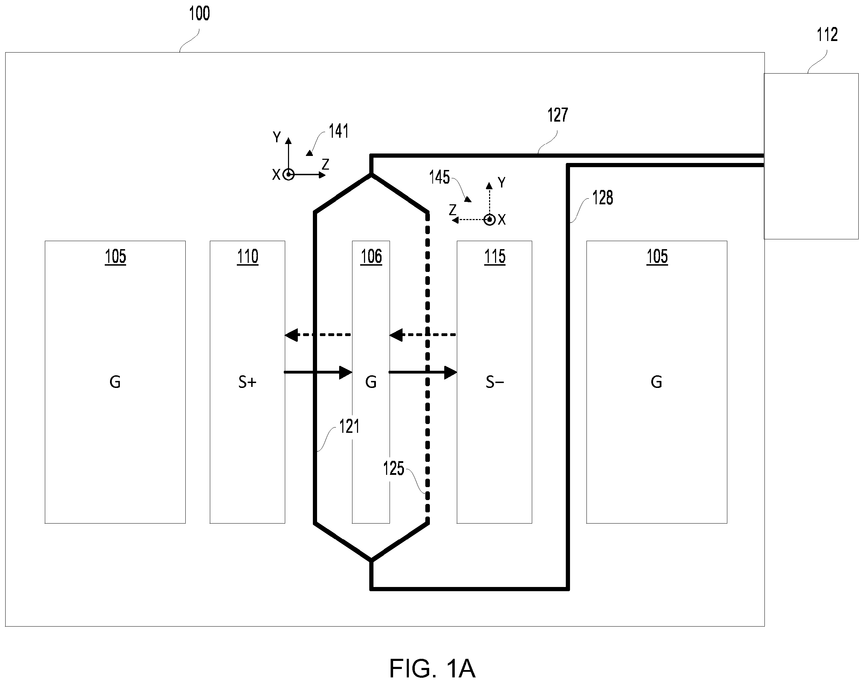

Refer now to the exemplary embodiment of Figure 1A. Figure 1A is a diagram of a Mach-Zehnder interferometer (MZI) modulator 100 with a GSGSG signal configuration. An optical input and optical output 112 are shown in the upper right portion of Figure 1A. In some embodiments, the optical input and output outputs are implemented as a fiber array or a pair of fibers or other optical paths. The modulator substantially includes an input waveguide or optical path 127 that branches into two arms, such as a first arm 121 and a second arm 125. The two arms are recombined into a single output waveguide or optical path 128. In various embodiments, light carried in the first arm may be electro-optically modulated by an electric field formed between an S+ electrode 110 and a ground electrode 106. In various embodiments, light carried in the second arm may be electro-optically modulated by an electric field formed between an S- electrode 115 and a ground electrode 106. Additional ground electrode 105 may also be present in some embodiments.

In the MZI modulator of Figure 1A, in many embodiments, the waveguide in the first arm has some set of crystal axes 141 wherein the Y and Z axes are in the plane of the device. The waveguide in the second arm has some set of crystal axes 145 wherein the Z axis is reversed with respect to the direction of the Z axis of the first arm after domain-engineering by poling. In various embodiments, a domain engineering process may comprise a plurality of high voltage pulses applied across poling electrodes 211 and 213, wherein the peak voltage is above about 300 volts, or enough to induce an electric field of at least about 40 kV/mm in thin film lithium niobate, or enough to overcome the coercive field in the thin film ferroelectric being poled. In many embodiments, the peak voltage in a pulse may be held for about 10 ms. In some embodiments, the crystal orientation axes of the first arm are inverted, changed, or reversed by application of a plurality of high voltage pulses. In some embodiments, each pulse includes a high voltage and a low voltage. The high voltages range from about 100 volts (V) to about 500 volts, wherein the low voltages range from about 0 volts to less than about 100 volts. In some embodiments, each pulse is operable to induce an electric field of at least about 40 kV/mm in LiNbO3, or at least enough to overcome a coercive field of the ferroelectric material.

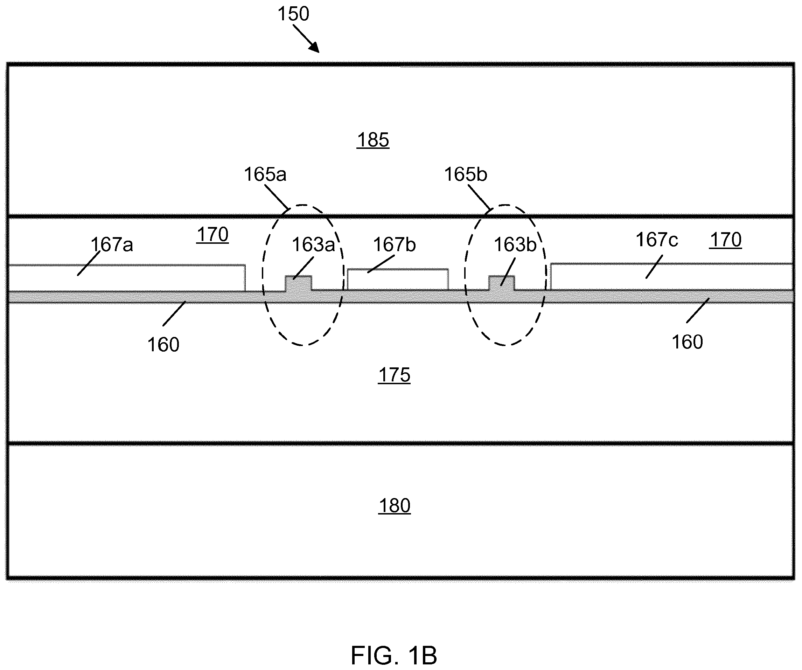

Figure 1B is a schematic cross-sectional diagram of a system 150 that shows various layers and portions according to an exemplary embodiment of the disclosure. The system150 may be an MZI modulator in some embodiments. In some embodiments, the system150 may be implemented as a photonic integrated circuit or chip. In various embodiments, some portions of the layers shown may be removed and other layers may be added or substituted for those shown. A layer of thin film ferroelectric material 160 has been patterned to define various elevated sections 163a and 163b. These elevated sections of layer160 may serve as the portions of the arms for an MZI modulator or may be adjacent to the waveguide cross-sections of the two arms of the MZI, respectively. The loading layers are configured to transmit light along each arm with one of the arms transmitting light of a different phase relative to the arm because of the domain engineering of one of or both of the ferromagnetic regions or sections in communication with portions of the various loading layers.

In some embodiments, layers 175, 170, and 185 may be loading layers such that a region of one or more of these layers is part of each arm of a given MZI. For example, within ellipses 165a and 165b various portions of layers 185, 170, and 175 are near sections 163a and 163b. The portions of the layers 185, 170, and 175 within ellipses 165a and 165b may define a partial cross-section of each arm. These layers may be part of each arm as it extends along a dimension of the device. If system 150 were in operation, light would be transmitted into or out of the plane of the page and some of the light may be transmitted within the layers and sections within ellipses 165a, 165b. The system 150 may include or be an electro-optical system or device.

In Figure 1B, portions or regions or layers 175, 170, and 185 that are in communication with or otherwise adjacent or near sections 163a and 163b. The elevated sections 163a and 163b may face upwards (in a first direction) or face downwards (no shown, in a second direction opposite to the direction depicted). As a result, sections of layer 160 that extend therefrom may be on either side of the thin film ferroelectric layer 160. Loading layers may also be on either or both sides of layer 160. One of the elevated sections 163a, 163b is domain engineered such as through polling and otherwise described herein. If for example section 163b is domain engineered, the arm of the modulator associated with that section 163b would have a first domain orientation and the other arm of the modulator associated with section 163a would have a second domain orientation that differs from the first domain orientation. In some embodiments, the portions of the layer 160 that are below sections 167a, 167b, and 167c may be removed.

Still referring to Figure 1B, the device 150 may include various electrical sections such as sections 167a, 167b, and 167c. These sections 167a, 167b, and 167c may serve as electrodes, signal lines, ground lines, and other electric connections as disclosed herein. Sections 167a, 167b, and 167c typically include a conductive material such as a metal. Substrate or substrate layer 180 is typically a substrate layer and may include silicon (Si) or SiO₂. Middle layer 170 may include SiO₂ "silicon nitride (SiN) or silicon (Si) or other waveguide materials. Upper layer 185 may include SiO₂, silicon nitride (SiN) or silicon (Si) or other waveguide materials. Lower layer 175 may include SiO₂, silicon nitride (SiN) or silicon (Si) or other waveguide materials. The reference to upper layer 185, middle layer 170, lower layer 175, and substrate 180 may also be identified as loading layers or waveguide layers and by the material used in each such layer without limitations. In various embodiments, one or more of the electrodes may be travelling wave electrodes. The various signal lines and layers and components of a given electro-optical system may be in electrical communication in various embodiments.

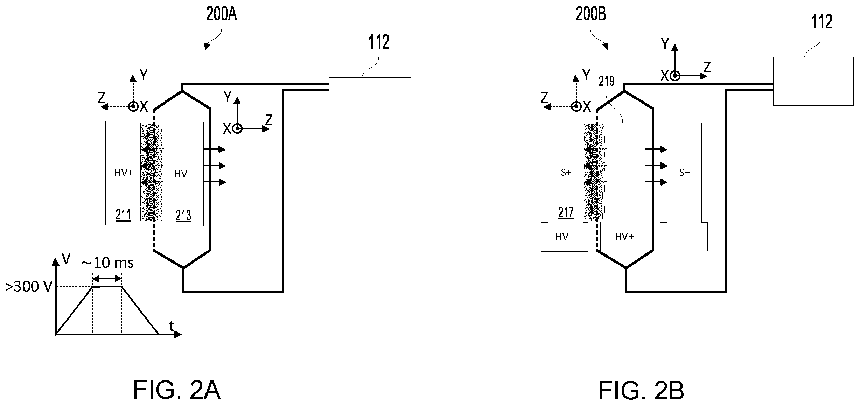

Refer now to the exemplary embodiment of Figure 2A. Figure 2A is diagram of an MZI modulator 200A wherein electrodes 211, 213 are deposited for the purpose of domain reversal only and then removed in the device fabrication process. In some embodiments, electrodes 211, 213 may be retained as electrodes for the modulator.

Refer now to the exemplary embodiment of Figure 2B. Figure 2B is a diagram of an alternate configuration of an MZI modulator 200B wherein signal and ground electrodes 217, 219 also serve as poling electrodes for domain engineering of one of the arms of the MZI modulator.

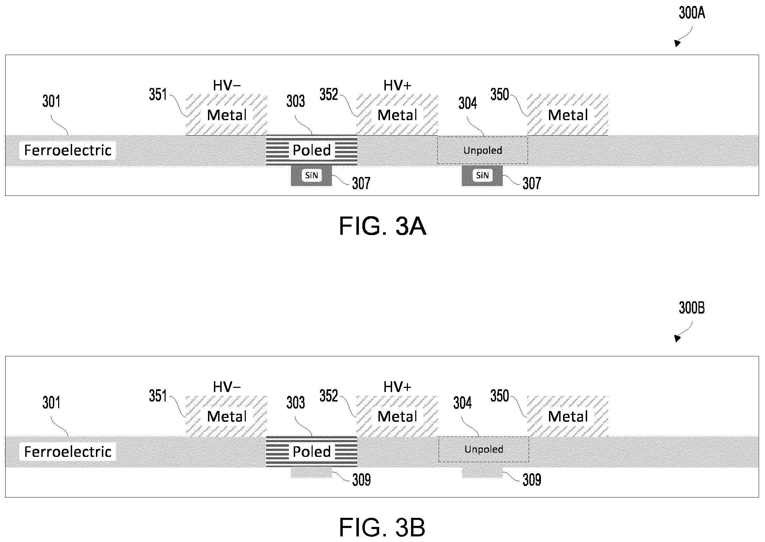

Refer now to the exemplary embodiment of Figure 3A. Figure 3A is a cross section 300A of a domain-engineered MZI modulator 300 with silicon nitride (SiN) loaded waveguides. In many embodiments, the waveguides may be loaded with silicon (Si), or silicon nitride (SiN), or other waveguide materials or loading layers regions or sections. In many embodiments, the loaded material can be on either side of the thin film ferroelectric.

A region 303 of a thin film ferroelectric 301 is poled or domain-engineered such that the two arms of the MZI modulator are modulated out-of-phase. Another region 304 of the thin film ferroelectric 301 remains unchanged or unpolled. An optical signal carried in the poled region 303 is electro-optically modulated by an electric field created between electrodes 351 and 352, while an optical signal carried in an un-poled region of the thin film ferroelectric between electrodes 350, 352 is electro-optically modulated by an electric field created between electrodes 350, 352. In many embodiments, electrodes 351, 352 are also used to domain-engineer or pole the poled region 303 during a fabrication process. In various embodiments, SiN waveguides serve to localize an optical signal in the thin film ferroelectric 401. One or more loading layers 307 are near, adjacent, or otherwise in communication with region 303 and region 304 as shown. In some embodiments, the loading layers 307 include silicon nitride, silicon, or other suitable wave guide materials. In various embodiments, each arm includes the one or more loading layers 307 or regions or portions of each such layer. Various electrodes disclosed herein may be patterned metal electrodes.

Refer now to the exemplary embodiment of Figure 3B. Figure 3B is a cross section 300B of a domain-engineered MZI modulator that is similar to the cross section of Figure 3A. In contrast with the cross-section of Figure 3A, the cross section of Figure 3B comprises shallow-etched ferroelectric waveguides 309 rather than silicon nitride waveguides. In various embodiments, the shallow-etched ferroelectric waveguides 309 serve to localize an optical signal in the thin film ferroelectric 301.

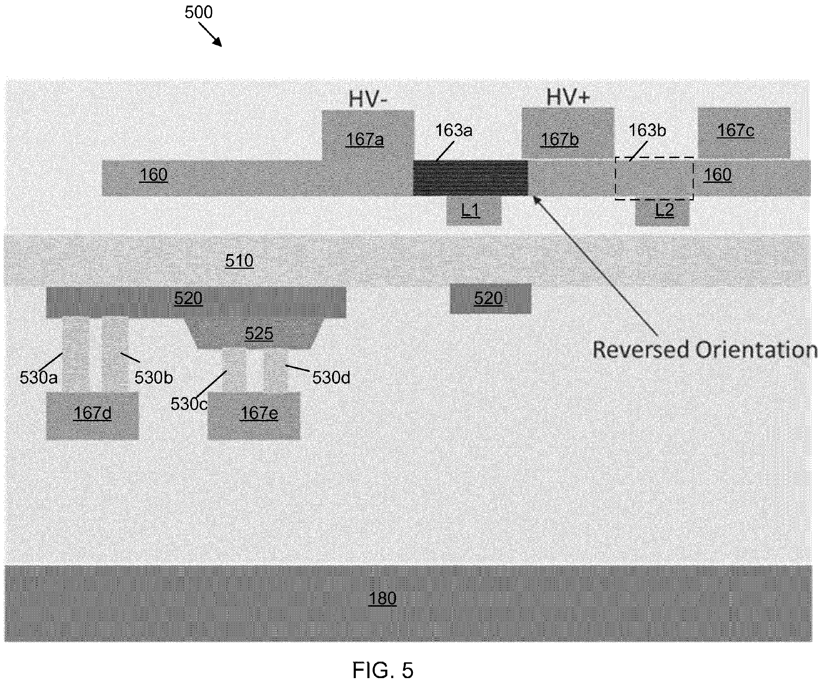

In many embodiments, an MZI modulator, such as the modulator of Figure 3A or the modulator of Figure 3B, may be integrated into a silicon photonic device. In some embodiments, an MZI modulator may be integrated on a lithium niobate-on-insulator monolithic wafer or integrated heterogeneously onto a silicon photonic wafer. An example of a wafer integrated embodiments is described with regard to Figure 5.

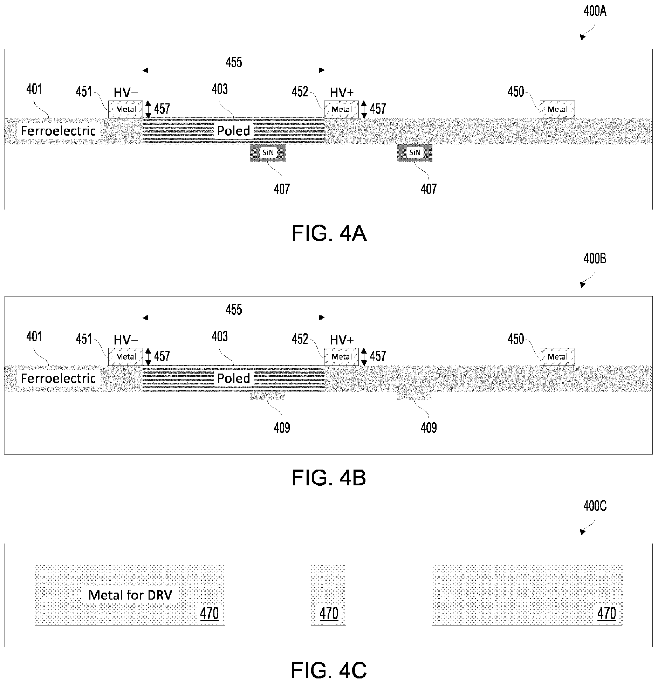

Refer now to the exemplary embodiment of Figure 4A. Figure 4A is a cross section 400A of a domain-engineered MZI modulator with silicon nitride (SiN) loaded waveguides. A region 403 of a thin film ferroelectric 401 is poled or domain-engineered such that the two arms of the MZI modulator are modulated out-of-phase. An optical signal carried in the poled region 403 is electro-optically modulated by an electric field created between electrodes 451 and 452, while an optical signal carried in an un-poled region of the thin film ferroelectric between electrodes 450, 452 is electro-optically modulated by an electric field created between electrodes 450, 452. In many embodiments, electrodes 451, 452 are also used to domain-engineer or pole the poled region 403 during a fabrication process.

In various embodiments, SiN waveguides 407 serve to localize an optical signal in the thin film ferroelectric 401. Finally, in many embodiments, additional metal layers 470 may serve as an interconnect to an electrical driver. In some embodiments, the driver may include one or more ground electrodes and one or more signal conductors. A given driver may be operable to electro-optically modulate a first arm and a second arm of an electro-optical modulator in response to an input signal to at least one of the one or more signal conductors. S1 and S2 may be connected to a driver by wire bonding or flip-chip bonding. Various components of a given electro-optical system embodiment may be in a flip-chip configuration or other configurations. In some embodiments, as part of the manufacturing method, in some embodiments, the method may include forming a first waveguide and a second waveguide on a substrate comprising a thin film ferroelectric material having one or more crystal orientation axes.

Refer now to the exemplary embodiment of Figure 4B. Figure 4B is a cross section 400B of a domain-engineered MZI modulator that is similar to the cross section of Figure 4A. In contrast with the cross-section of Figure 4A, the cross section of Figure 4B comprises shallow-etched ferroelectric waveguides 409 rather than silicon nitride waveguides. In various embodiments, the shallow-etched ferroelectric waveguides 409 serve to localize an optical signal in the thin film ferroelectric 401. The first waveguide and the second wave guide include silicon or silicon nitride (SiN).

In various embodiments, in Figures 4A and 4B, a distance 455 between HV- 451 and HV+ 452 metal may be between about 10 micrometers and about 100 micrometers. In other embodiments, a thickness 457 of HV- and HV+ metal may be between about 100 nanometers and about 900 nanometers. In related embodiments, the HV- and HV+ electrodes may be composed substantially of copper, nickel, titanium, indium tin oxide, or another conductive material.

Refer now to the embodiment of Figure 4C. Figure 4C is a top-down view 400C of contact pads for a driver suitable for use with the various devices and MZI incorporating embodiments disclosed herein. The RF driver shown has the advantage of being simple and robust.

Refer now to the embodiment of Figure 5. Some of the devices, such as the modulators, described herein may be integrated on a silicon photonic wafer as shown in device 500. Device 500 includes various layers described herein, such as for example with regard to Figure 1B. Sections of a ferromagnetic thin film layer 160 may be defined as a polled section 163a and an unpolled section 163b. Each section 163a and 163b are typically adjacent, near, or in communication with various loading layers L1, L2. Loading layers L1 and L2 may define or include a portion of each respective arm of a MZI. The domain orientation of section 163a is opposite or different from that of section 163b. Substrate 180 may include silicon or other semiconductors. References to various sections may also be referenced as regions, or layers, or structures as applicable.

In some embodiment, layer 510 may be part of a silicon photonic wager. Layer 510 may include SiO₂ and other Si-based materials disclosed herein. Layer 520 is typically etched to form two sections as shown. Layer 520 typically is the same material as layer 180. Layer 520 may include Silicon, SiiO₂ and other Si-based materials disclosed herein. Various sections 167a, 167b, 167c, 167d, and 167e may be metal or electrically conductive and may be used as electrical connections. The layers and regions below the loading layers such as those layers and regions between layer 510 and 180 may include one or more photodiodes. The photodiodes may include an intrinsic semiconductor material such as shown in layers 525. In some embodiments, section 525 includes germanium or other photodiode appropriate materials. Various electrical vias or channels 530a, 530b, 530c, and 530d may also be used to electrically connect sections 167a and 167e to layers 525 and 520 as shown. In various embodiments, one or more volumed of domain engineered materials may be polled and used in a given system. Polling may be used to change the domain orientation of various volumes of materials in different embodiments. In some embodiments, references to layers may also include regions or sections.

In some embodiment, thin-film ferroelectric materials (for example, LiNbO₃, LiTaO₃ or BaTiO₃, etc.) may be integrated on to silicon photonic wafers as shown in Figure5. With metallization process on top (or beneath) of thin-film ferroelectric materials and HV electrical pulse, localized domain engineering could be obtained, as indicated in Fig. 5. In some embodiment, thin-film ferroelectric materials could be poled separately before being integrated to silicon photonic wafers.

Although, the disclosure relates to different aspects and embodiments, it is understood that the different aspects and embodiments disclosed herein can be integrated, combined, or used together as a combination system, or in part, as separate components, devices, and systems, as appropriate. Thus, each embodiment disclosed herein can be incorporated in each of the aspects to varying degrees as appropriate for a given implementation. Further, the various apparatus, optical elements, coatings / layers, optical paths, optical fiber arrays, interferometers, domain-engineered materials and structures, domain-engineered modulator arms, waveguides, splitters, couplers, combiners, substrates, waveguides, electro-optical devices, inputs, outputs, ports, channels, components and parts of the foregoing disclosed herein can be used with any laser, laser-based communication system, waveguide, fiber, transmitter, transceiver, receiver, and other devices and systems without limitation.

Having thus described several aspects and embodiments of the technology of this application, it is to be appreciated that various alterations, modifications, and improvements will readily occur to those of ordinary skill in the art. Such alterations, modifications, and improvements are intended to be within the spirit and scope of the technology described in the application. It is, therefore, to be understood that the foregoing embodiments are presented by way of example only and that, within the scope of the appended claims and equivalents thereto, inventive embodiments may be practiced otherwise than as specifically described. In addition, any combination of two or more features, systems, articles, materials, and/or methods described herein, if such features, systems, articles, materials, and/or methods are not mutually inconsistent, is included within the scope of the present disclosure.

In various embodiments, a processor may be a physical or virtual processor. In other embodiments, a virtual processor may be spread across one or more portions of one or more physical processors. In certain embodiments, one or more of the embodiments described herein may be embodied in hardware such as a Digital Signal Processor (DSP). In certain embodiments, one or more of the embodiments herein may be executed on a DSP. One or more of the embodiments herein may be programmed into a DSP. In some embodiments, a DSP may have one or more processors and one or more memories. In certain embodiments, a DSP may have one or more computer readable storages. In many embodiments, a DSP may be a custom designed ASIC chip. In other embodiments, one or more of the embodiments stored on a computer readable medium may be loaded into a processor and executed.

Also, as described, some aspects may be embodied as one or more methods. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The phrase "and/or," as used herein in the specification and in the claims, should be understood to mean "either or both" of the elements so conjoined, i.e., elements that are conjunctively present in some cases and disjunctively present in other cases.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "substantially," "approximately" and "about" may be used to mean within ±20% of a target value in some embodiments, within ±10% of a target value in some embodiments, within ±5% of a target value in some embodiments, and yet within ±2% of a target value in some embodiments. The terms "approximately" and "about" may include the target value.

In the claims, as well as in the specification above, all transitional phrases such as "comprising," "including," "carrying," "having," "containing," "involving," "holding," "composed of," and the like are to be understood to be open-ended, i.e., to mean including but not limited to. The transitional phrases "consisting of" and "consisting essentially of" shall be closed or semi-closed transitional phrases, respectively.

Where a range or list of values is provided, each intervening value between the upper and lower limits of that range or list of values is individually contemplated and is encompassed within the disclosure as if each value were specifically enumerated herein. In addition, smaller ranges between and including the upper and lower limits of a given range are contemplated and encompassed within the disclosure. The listing of exemplary values or ranges is not a disclaimer of other values or ranges between and including the upper and lower limits of a given range.

The use of headings and sections in the application is not meant to limit the disclosure; each section can apply to any aspect, embodiment, or feature of the disclosure. Only those claims which use the words "means for" are intended to be interpreted under 35 USC 112, sixth paragraph. Absent a recital of "means for" in the claims, such claims should not be construed under 35 USC 112. Limitations from the specification are not intended to be read into any claims, unless such limitations are expressly included in the claims.

Embodiments disclosed herein may be embodied as a system, method or computer program product. Accordingly, embodiments may take the form of an entirely hardware embodiment, an entirely software embodiment (including firmware, resident software, microcode, etc.) or an embodiment combining software and hardware aspects that may all generally be referred to herein as a "circuit," "module," or "system." Furthermore, embodiments may take the form of a computer program product embodied in one or more computer readable medium(s) having computer readable program code embodied thereon.

## Claims

1. An electro-optical modulator system comprising:
a ferroelectric material having one or more crystal orientation axes; and
a Mach-Zehnder interferometer, MZI, modulator comprising an MZI input, an MZI output, a first arm and a second arm, wherein the first arm and the second arm are in optical communication with the MZI input and the MZI output,
the ferroelectric material defining or in communication with a portion of the first arm and the second arm, wherein the first arm has a first phase parameter and the second arm has a second phase parameter, wherein the first arm has a first domain orientation and the second arm has a second domain orientation, wherein the second domain orientation is substantially opposite the first domain orientation, wherein the portion of the first arm comprises a portion of one or more loading layers, wherein the portion of the second arm comprises a portion of one or more loading layers.

2. The electro-optical modulator system of claim 1, wherein the ferroelectric material defining a portion of the second arm comprises one or more volumes of domain-engineered materials, the first arm further comprising a first waveguide, the second arm further comprising a second waveguide, wherein each waveguide comprises a respective portion of one or more loading layers,
optionally wherein the one or more volumes of domain-engineered materials were polled to change the first domain orientation to the second domain orientation.

3. The electro-optical modulator system of any preceding claim, wherein the first phase parameter differs from the second phase parameter by about 180 degrees.

4. The electro-optical modulator system of any preceding claim further comprising a single differential drive signal line, the single differential drive signal line comprising a first differential signal line, S1, and a second differential signal line, S2, wherein S1 is in electrical communication with the first arm and S2 is in electrical communication with the second arm.

5. The electro-optical modulator system of claim 4 further comprising a traveling wave electrode.

6. The electro-optical modulator system of claim 5, wherein the traveling wave electrode comprises a first outer ground electrode, G1, and a second outer ground electrode, G2, with signal line, S1, and signal line, S2, disposed between G1 and G2.

7. The electro-optical modulator system of claim 6 further comprising a middle electrode, G3, wherein G3 is a biasing pad or a middle ground electrode, wherein G3 is disposed between S1 and S2.

8. The electro-optical modulator system of claim 6 or 7, wherein S1 and S2 are connected to a driver by wire bonding or flip-chip bonding.

9. The electro-optical modulator system of any preceding claim further comprising a driver comprising one or more ground electrodes and one or more signal conductors, the driver operable to electro-optically modulate a first arm and a second arm of an electro-optical modulator in response to an input signal to at least one of the one or more signal conductors.

10. The electro-optical modulator system of any preceding claim, wherein one or more of:
A) one or more of the crystal orientation axes of the ferroelectric material in the first arm are changed with respect to one or more of the crystal orientation axes of the ferroelectric material in the second arm.
B) the crystal orientation axes of the first arm are inverted by application of a plurality of high voltage pulses, each pulse comprising a high voltage and a low voltage, wherein the high voltage ranges from about 100 volts to about 500 volts, wherein the low voltage ranges from about 0 volts to less than about 100 volts, optionally wherein each pulse is operable to induce an electric field of at least about 40 kV/mm in LiNbO₃, or at least enough to overcome a coercive field of the ferroelectric material.

11. The electro-optical modulator system of any preceding claim, wherein the ferroelectric material is one or more of:
A) LiNbO₃,
B) LiTaO₃,
C) BaTiO₃.

12. A method for fabricating an electro-optical modulator the method comprising:
forming a first waveguide and a second waveguide on a substrate comprising a thin film ferroelectric material having one or more crystal orientation axes;
reversing a crystal orientation axis of a first arm of an MZI modulator by poling the first arm with pulses having a first voltage and pulses having a second voltage; and
forming a differential signal line comprising
a first outer ground electrode, G1, and a second outer ground electrode, G2, with signal line, S1, and signal line, S2, disposed between G1 and G2.

13. The method of claim 12, wherein the first voltage and the second voltage differ by at least 200 volts.

14. The method of claim 12 or 13, wherein the first waveguide and the second waveguide comprises silicon or silicon nitride, SiN15. The method of claim 14, wherein the thin film ferroelectric material is selected from a group consisting of LiNbO₃, LiTaO₃, and BaTiO₃.
